# EUROPEAN PATENT APPLICATION

(11) **EP 1 471 592 A2**
(43) Date of publication of application: **27.10.2004**
(21) Application number: 04252182.3
(22) Date of filing: 14.04.2004
(51) Int. Cl.: H01M 10/40, H01M 6/16

(54) **Electrochemical cell with polymeric electrolyte**

(30) Priority: 22.04.2003 JP 2003117179
(71) Applicant: Nec Tokin Corporation, Sendai-shi, Miyagi (JP)
(72) Inventor: Mitani, Masaya NEC TOKIN Corporation, Sendai-shi Miyagi (JP); Nobuta, Tomoki, NEC TOKIN Corporation, Sendai-shi Miyagi (JP); Kamisuki, Hiroyuki, NEC TOKIN Corporation, Sendai-shi Miyagi (JP); Yoshinari, Tetsuya, NEC TOKIN Corporation, Sendai-shi Miyagi (JP)
(74) Representative: Smaggasgale, Gillian Helen

(57) **Abstract**

This invention relates to an electrochemical cell comprising a cathode containing a proton-conducting compound as an electrode active material, an anode containing a proton-conducting compound as an electrode active material and an aqueous electrolytic solution containing a proton source as an electrolyte, wherein the electrolytic solution comprises a polymeric compound having an atom with an unpaired electron in its principal chain as an electron-transfer promoter. This invention can provide an electrochemical cell exhibiting improved capacity, high-speed charge/discharge properties and cycle properties.

## Description

### BACKGROUND OF THE INVENTION

### 1. Field of the Invention

This invention relates to an electrochemical cell such as a secondary battery and an electric double-layer capacitor.

### 2. Description of the Related Art

There have been suggested and practically used electrochemical cells (hereinafter, simply referred to as "cells") such as secondary batteries and electric double layer capacitors in which a proton-conducting polymer is, for example, used as an electrode active material.

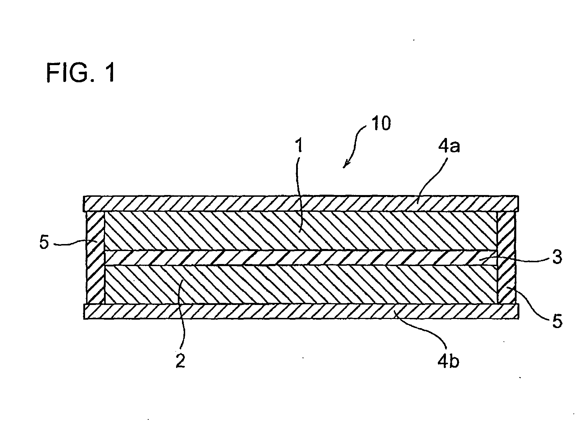

As shown in FIG. 1, a conventional cell has a structure where a cathode layer 1 containing, e. g., a proton-conducting polymer as an electrode active material is formed on a cathodic current collector 4a while an anode layer 2 is formed on an anodic current collector 4b, and the cathode and the anode layers 1, 2 are combined via a separator 3 and where only protons act as a charge carrier. Also, the cell is impregnated with an aqueous or non-aqueous solution containing a proton-source as an electrolytic solution, and is sealed by a gasket 5.

The cathode and the anode layers 1, 2 are formed using electrode materials comprising an active material powder such as a doped or undoped proton-conducting polymer, a conduction auxiliary and a binder.

These electrode layers can be formed by a method comprising the steps of placing the electrode materials in a mold with a predetermined size and molding it by a hot press to form a solid electrode layer, or a method comprising the steps of coating the slurry of the materials on the current collectors 4a, 4b by screen printing and drying it to form the coated electrode layers. Then, the cathode and the anode layers 1, 2 thus formed are mutually faced via a separator 3 to give a unit device 10 for a cell.

Examples of a proton-conducting compound used as an electrode active material include π-conjugated polymers such as polyaniline, polythiophene, polypyrrole, polyacetylene, poly-p-phenylene, polyphenylene-vinylene, polyperinaphthalene, polyfuran, polyflurane, polythienylene, polypyridinediyl, polyisothianaphthene, polyquinoxaline, polypyridine, polypyrimidine, polyindole, polyaminoanthraquinone, polyimidazole and their derivatives; indole π-conjugated compounds such as an indole trimer compound; quinones such as benzoquinone, naphthoquinone and anthraquinone; quinone polymers such as polyanthraquinone, polynaphthoquinone and polybenzoquinone where a quinone oxygen can be converted into a hydroxyl group by conjugation); and proton-conducting polymer prepared by copolymerizing two or more of the monomers giving the above polymers. These compounds may be doped to form a redox pair for exhibiting conductivity. These compounds are appropriately selected as a cathode active material and an anode active material, taking a redox potential difference into account.

Known electrolytic solutions such an aqueous electrolytic solution consisting of an aqueous acid solution and a non-aqueous electrolytic solution in an organic solvent as a medium. In an electrode comprising a proton-conducting compound, the former aqueous electrolytic solution is exclusively used because it can give a particularly high capacity cell. The acid used may be an organic or inorganic acid; for example, inorganic acids such as sulfuric acid, nitric acid, hydrochloric acid, phosphoric acid, tetrafluoroboric acid, hexafluorophosphoric acid and hexafluorosilicic acid and organic acids such as saturated monocarboxylic acids, aliphatic carboxylic acids, oxycarboxylic acids, p-toluenesulfonic acid, polyvinyl sulfonic acid and lauric acid.

Japanese Patent Application laid-open publication No. 2000-149981 (Patent Reference 1) has disclosed, as an additive for a lead storage battery, a polymer having an intramolecular hydroxy group such as polyvinyl alcohol, polyethylene glycol, polyvinylpyrrolidone, polyacrylic acid or its esters with a polymerization degree of 30 to 3000. It has been disclosed that either the polymer or particulate colloidal barium sulfate is added to an electrolytic solution or an electrode active material molding, to provide a lead storage battery with a significantly improved cycle life in comparison with a conventional battery.

According to the description in the publication, a cycle life is improved for the following reason. In a dilute aqueous sulfuric acid solution, an organic polymer having a hydroxy group such as polyvinyl alcohol is positively charged due to coordination of a proton to the hydroxy group and is adsorbed to a lead electrode surface as an anode. As a result, lead-metal crystal growth is inhibited in the anode.

The invention described in Patent Reference 1 does not relate to an electrochemical cell shown in FIG. 1, but is for improving properties of a lead storage battery comprising lead metal or lead dioxide in the electrode. A polymer having an intramolecular hydroxy group is used as an additive to an aqueous electrolytic solution for the lead storage battery

Japanese Patent Application laid-open publication No. 62-268121 (Patent Reference 2) has disclosed an electrolytic solution for an electrolytic capacitor comprising a dicarboxylic acid or its salt and polyethylene glycol as an additive in ethylene glycol as a main solvent. It has described that the electrolytic solution can be used to prevent deterioration in capacitance properties in an electrolytic capacitor and to improve a spark-generating voltage.

An electrochemical cell according to the prior art, however, has a problem that an electrochemical cell comprising a proton-conducting compound as an electrode active material has a large interface resistance in an electrode active material /electrolytic solution interface, resulting in deterioration in high-speed charge/discharge properties and cycle-life properties.

### SUMMARY OF THE INVENTION

An objective of this invention is to provide an electrochemical cell exhibiting improved capacity, high-speed charge/discharge properties and cycle-life properties, in which an electrode active material/electrolytic solution interface has a reduced resistance.

This invention provides an electrochemical cell exhibiting improved capacity, high-speed charge/discharge properties and cycle-life properties, in which an amphipathic polymeric compound having an unpaired electron on the principal chain of a polymer such as polyethylene glycol is added as an additive for an electrolytic solution to reduce a resistance in an electrolytic solution/electrode layer interface in charge transfer.

According to the invention, there is provided an electrochemical cell comprising a cathode containing a proton-conducting compound as an electrode active material, an anode containing a proton-conducting compound as an electrode active material and an aqueous electrolytic solution containing a proton source as an electrolyte, wherein the electrolytic solution comprises a polymeric compound having an atom with an unpaired electron in its principal chain as an electron-transfer promoter.

The electrochemical cell of this invention preferably comprises, as the electron-transfer promoter, a polymeric compound which in the principal chain, has oxygen or nitrogen as an atom with an unpaired electron.

The electrochemical cell of this invention preferably comprises a polymeric compound having an alkylene oxide moiety in a repeating unit as the electron-transfer promoter.

The electrochemical cell of this invention preferably comprises a compound selected from the group consisting of polyethylene glycol, polyglycerol and polyethyleneimine as the electron-transfer promoter.

In the electrochemical cell of this invention, the polymeric compound preferably has an average molecular weight of 200 to 20,000.

In the electrochemical cell of this invention, a content of the polymeric compound is preferably 0.01 to 30 % by weight (wt%) to the electrolytic solution.

In the electrochemical cell of this invention, the electrochemical cell is preferably operable such that as a charge carrier, protons are exclusively involved in a redox reaction of the active materials associated with charge/discharge in both electrodes.

According to this invention, adding an electron-transfer promoter such as polyethylene glycol to a cell system can improve an electron-transfer reaction in an electrolytic solution/electrode layer interface, to provide an electrochemical cell having improved capacity, high-speed charge/discharge properties and cycle properties.

### BRIEF DESCRIPTION OF THE DRAWINGS

FIG. 1 is a cross-sectional view showing a basic structure of an electrochemical cell.

### DETAILED DESCRIPTION OF THE PREFERRED EMBODIMENTS OF THE INVENTION

Preferred embodiments of this invention will be described.

An electrochemical cell according to an embodiment of this invention has a basic structure (basic element) 10 shown in FIG. 1.

In this structure, a positive electrode layer 1 and a negative electrode layer 2 face to each other via a separator 3. The positive electrode layer 1 may contain a proton-conducting compound as a cathode active material, a conduction auxiliary and a binder, while the negative electrode layer 2 can contain a proton-conducting compound as an anode active material, a conduction auxiliary and a binder.

The separator 3 may be, for example, a conventionally used polyolefin porous membrane or ion-exchange membrane with a thickness of 10 to 50 µm.

The electrolytic solution may be an aqueous solution containing an electron-transfer promoter and a proton source.

On the outer surfaces of the positive and the negative electrode layers 1, 2, there are disposed current collectors 4a, 4b, respectively, while the periphery is surrounded by a gasket 5 for sealing.

The above basic element may be prepared by the known process described above, except adding an electron-transfer promoter to an electrolytic solution.

The electron-transfer promoter added to the electrolytic solution in the electrochemical cell of this invention is a polymeric compound having an atom with an unpaired electron in the principal chain.

The polymeric compound is preferably a compound which in the principal chain, has oxygen or nitrogen as an atom with an unpaired electron; particularly preferably a polymeric compound having an alkylene oxide moiety in a repeating unit. Furthermore, the polymeric compound is preferably amphipathic.

Examples of an alkylene oxide moiety in the polymeric compound include methylene oxide (-CH₂O-), ethylene oxide (-CH₂CH₂O-) and propylene oxide (-CH₂CH₂CH₂O-), which may be substituted with a substituent such as hydroxy group (OH). One principal chain may have different type alkylene oxide moieties. Types or a combination of such alkylene oxide moieties may be appropriately selected depending on a molecular weight, as long as these moieties do not deteriorate affinity (solubility) of the polymeric compound therewith to an electrolytic solution.

The polymeric compound having for example an average molecular weight of 200 to 2,000,000 may be used. The polymeric compound preferably has an average molecular weight of 200 to 200,000, more preferably 200 to 20,000. An excessively higher or lower molecular weight may lead to insufficiently effect of addition.

A content of the polymeric compound in the electrolytic solution may be appropriately selected from the range of, for example, 0.005 to 35 wt%. The content of the polymeric compound is preferably 0.01 wt% or more, more preferably 0.05 wt% or more, while preferably 30 wt% or less, more preferably 10 wt% or less, further preferably 5 wt% or less. An excessively higher or lower content may lead to insufficiently effect of addition.

The polymeric compound used in this invention may be polyethylene glycol (a), polyglycelol (b) or polyethyleneimine (c) represented by the following chemical formulas, preferably polyethylene glycol in the light of some factors such as effects of addition, availability and a price. In these formulas, n, x, and y independently represent an arbitrary integer.

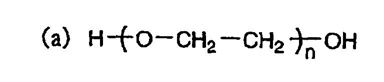

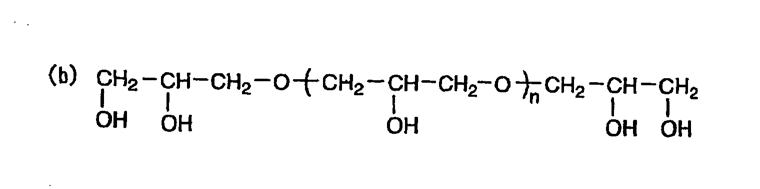

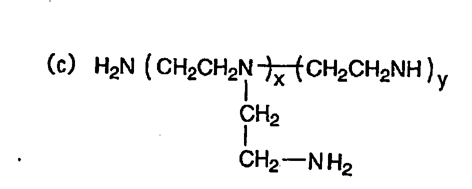

In an electrochemical cell of this invention, an electrolytic solution comprises a polymeric compound having an atom with an unpaired electron in the principal chain, resulting in improved affinity in an electrode layer/electrolytic solution interface. Therefore, an interface resistance in a solid/liquid interface can be reduced, charge transfer can be improved and thus electron transfer in the electrode layer/electrolytic solution interface can more smoothly proceed.

Therefore, in an electrochemical cell of this invention in which an electrolytic solution comprises such a polymeric compound, a capacity, high-speed charge/discharge properties and cycle-life properties can be improved.

Such effects may be more prominently achieved by an electrochemical cell which is operable such that as a charge carrier, protons are exclusively involved in a redox reaction associated with charge/discharge in both electrodes. More specifically, preferred is an electrochemical cell comprising an electrolytic solution containing a proton source, where a proton concentration in the electrolyte and an operating voltage are controlled to allow the cell to operate such that bonding/elimination of a proton in the electrode active material may be exclusively involved in electron transfer in a redox reaction in both electrodes associated with charge/discharge.

The following reaction equation shows a reaction of indole trimer as one of proton-conducting compounds. The first step shows a doping reaction, where X⁻ represents a dopant ion such as sulfonate and halide ions, which can dope a proton-conducting compound to endow the compound with electrochemical activity. The second step shows an electrochemical reaction (electrode reaction) involving bonding/elimination of a proton in a doped compound. In an electrochemical cell in which such an electrode reaction occurs, bonding/elimination of a proton is exclusively involved in electron transfer in a redox reaction, so that only protons are transferred during charge/discharge. Consequently, it results in reduced volume variation in the electrode associated with a reaction and better cycle properties. Furthermore, a higher proton-transfer rate can accelerate a reaction, resulting in improved high-rate properties, i. e., improved high-speed charge/discharge properties.

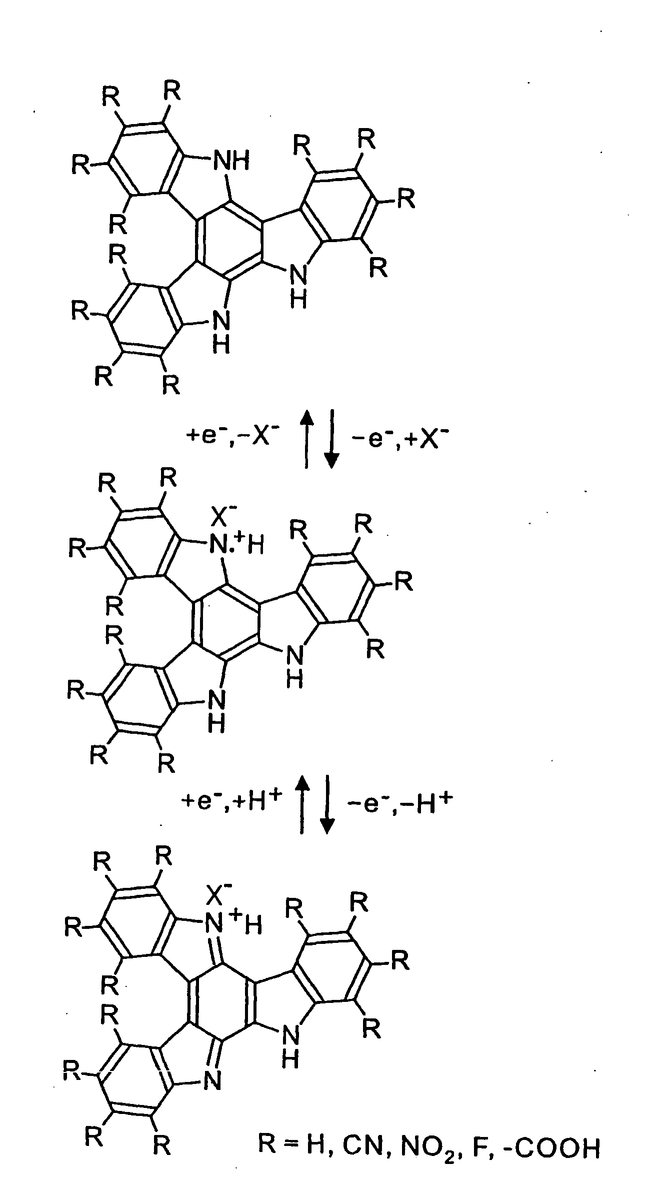

As described above, an electrode active material in this invention is a proton-conducting compound, which is an organic compound (including a polymer) capable of storing electrochemical energy by a reaction with ions of an electrolyte.

Such a proton-conducting compound may be any of known compound conventionally used; for example, π-conjugated polymers such as polyaniline, polythiophene, polypyrrole, polyacetylene, poly-p-phenylene, polyphenylene-vinylene, polyperinaphthalene, polyfuran, polyflurane, polythienylene, polypyridinediyl, polyisothianaphthene, polyquinoxaline, polypyridine, polypyrimidine, polyindole, polyaminoanthraquinone, polyimidazole and their derivatives; indole π-conjugated compound such as an indole trimer compound; quinones such as benzoquinone, naphthoquinone and anthraquinone; quinone polymers such as polyanthraquinone, polynaphthoquinone and polybenzoquinone where a quinone oxygen can be converted into a hydroxyl group by conjugation; and proton-conducting polymer prepared by copolymerizing two or more of the monomers giving the above polymers. These compounds may be doped to form a redox pair for exhibiting conductivity. These compounds are appropriately selected as a cathode active material and an anode active material, taking a redox potential difference into account.

Preferable examples of a proton-conducting compound include π-conjugated compounds or polymers having a nitrogen atom, quinone compounds and quinone polymers.

A proton source in the proton-source-containing (proton donating) electrolyte may be an inorganic or organic acid. Examples of an inorganic acid include sulfuric acid, nitric acid, hydrochloric acid, phosphoric acid, tetrafluoroboric acid, hexafluorophosphoric acid and hexafluorosilicic acid. Examples of an organic acid include saturated monocarboxylic acids, aliphatic carboxylic acids, oxycarboxylic acids, p-toluenesulfonic acid, polyvinylsulfonic acid and lauric acid. Among these proton-source-containing electrolytes, an aqueous acid-containing solution is preferable and an aqueous solution of sulfuric acid is more preferable.

A proton concentration in an electrolytic solution containing a proton source is preferably 10⁻³ mol/L or more, more preferably 10⁻¹ mol/L or more in the light of reactivity of the electrode materials while being preferably 18 mol/L or less, more preferably 7 mol/L or less in the light of prevention of deterioration in activity of the electrode materials and dissolution of the electrode materials.

### EXAMPLES

Examples of this invention will be more specifically described with reference to a secondary battery. The above basic configuration may be appropriately selected to be suitable as a capacitor.

### Example 1

A positive electrode layer 1 was prepared by combining 72 wt% of 5-cyanoindole trimer represented by the following chemical formula as a cathode active material, 20 wt% of vapor-grown carbon as a conduction auxiliary and 8 wt% of polyvinylidene fluoride (average molecular weight: 1100) as a binder, stirring and mixing the mixture by a blender, and molding the mixture into a given size by a hot press.

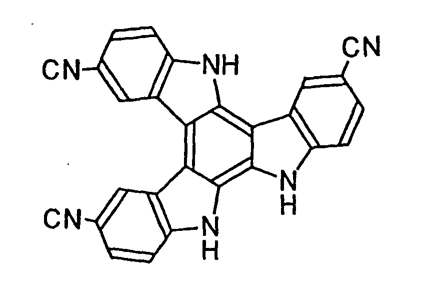

A negative electrode layer 2 was prepared by combining 75 wt% of polyphenylquinoxaline represented by the following chemical formula as an anode active material and 25 wt% of vapor-grown carbon as a conduction auxiliary, stirring and mixing the mixture by a blender and molding the mixture into a given size by a hot press.

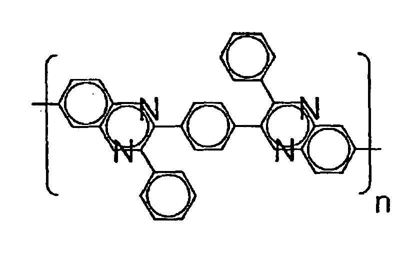

The positive and the negative electrode layers 1, 2 impregnated with an electrolytic solution were positioned such that they mutually faced via a separator 3. On the outer surfaces of the positive and the negative electrode layers 1, 2, current collectors 4a, 4b were placed, respectively. The resulting laminate was sealed with a gasket 5 to provide an electrochemical cell shown in FIG. 1.

The electrolytic solution used was prepared by adding 0.5 wt% of polyethylene glycol with an average molecular weight of 200 as an electron-transfer promoter to a 20 wt% aqueous solution of sulfuric acid.

Battery properties of the electrochemical cell thus obtained are shown in Table 1. As seen from Table 1, the electrochemical cell in Example 1 exhibited improvement in a capacity and a cycle life by 7 % and 23 %, respectively, compared with Comparative Example described below. Capacity and cycle-life values in Table 1 are relative values, assuming that a value in Comparative Example is 100.

The charge/discharge conditions in measurement are as follows:
Charge: constant current/voltage (CCCV), 5C, 1.2 V, 10 min;
Discharge: constant current (CC), 1C, 0.8 V (discharge final voltage).

### Comparative Example 1

An electrochemical cell was prepared as described in Example 1, except that an electron-transfer promoter was not added to an electrolytic solution. Measurement results for its properties are shown in Table 1. The cycle-life number of the electrochemical cell was 5,000 cycles.

### Example 2

An electrochemical cell was prepared as described in Example 1, except that 0.5 wt% of polyethylene glycol with an average molecular weight of 4,000 was added as an electron-transfer promoter to an electrolytic solution. Measurement results for its properties are shown in Table 1. As seen from Table 1, the electrochemical cell in Example 2 exhibited improvement in a capacity and a cycle life by 7 % and 25 %, respectively, compared with Comparative Example 1.

After charging at a constant current/voltage (CCCV) condition of 5 C, 1.2 V and 10 min., and discharging at a constant current (CC) of 20 C to 0.8 V, the cell exhibited an improved remaining capacity by 50 %, compared with the cell in Comparative Example 1 after a charge/discharge run under the same conditions.

### Example 3

An electrochemical cell was prepared as described in Example 1, except that 0.5 wt% of polyethylene glycol with an average molecular weight of 20,000 was added as an electron-transfer promoter to an electrolytic solution. Measurement results for its properties are shown in Table 1. As seen from Table 1, the electrochemical cell in Example 3 exhibited improvement in a capacity and a cycle life by 8 % and 20 %, respectively, compared with Comparative Example 1.

### Example 4

An electrochemical cell was prepared as described in Example 1, except that 0.1 wt% of polyethylene glycol with an average molecular weight of 4,000 was added as an electron-transfer promoter to an electrolytic solution. Measurement results for its properties are shown in Table 1. As seen from Table 1, the electrochemical cell in Example 4 exhibited improvement in a capacity and a cycle life by 13 % and 35 %, respectively, compared with Comparative Example 1.

### Example 5

An electrochemical cell was prepared as described in Example 1, except that 0.005 wt% of polyethylene glycol with an average molecular weight of 4,000 was added as an electron-transfer promoter to an electrolytic solution. Measurement results for its properties are shown in Table 1. As seen from Table 1, the electrochemical cell in Example 5 exhibited improvement in a capacity and a cycle life by 5 % and 2 %, respectively, compared with Comparative Example 1.

### Example 6

An electrochemical cell was prepared as described in Example 1, except that 35 wt% of polyethylene glycol with an average molecular weight of 4,000 was added as an electron-transfer promoter to an electrolytic solution. Measurement results for its properties are shown in Table 1. As seen from Table 1, the electrochemical cell in Example 6 exhibited improvement in a capacity and a cycle life by 1 % and 5 %, respectively, compared with Comparative Example 1.

### Example 7

An electrochemical cell was prepared as described in Example 1, except that 0.1 wt% of polyethylene glycol with an average molecular weight of 2,000,000 was added as an electron-transfer promoter to an electrolytic solution. Measurement results for its properties are shown in Table 1. As seen from Table 1, the electrochemical cell in Example 7 exhibited improvement in a capacity and a cycle life by 1 % and 1 %, respectively, compared with Comparative Example 1.

**Table 1**

| | Electron-transfer promoter | | | Properties | |
|---|---|---|---|---|---|
| | Compound Name | Average molecular weight | Content (wt%) | Capacity | Cycle life |
| Example 1 | Polyethylene glycol | 200 | 0.5 | 107 | 123 |
| Example 2 | Polyethylene glycol | 4,000 | 0.5 | 107 | 125 |
| Example 3 | Polyethylene glycol | 20,000 | 0.5 | 108 | 120 |
| Example 4 | Polyethylene glycol | 4,000 | 0.1 | 113 | 135 |
| Example 5 | Polyethylene glycol | 4,000 | 0.005 | 105 | 102 |
| Example 6 | Polyethylene glycol | 4,000 | 35 | 101 | 105 |
| Example 7 | Polyethylene glycol | 2,000,000 | 0.1 | 101 | 101 |
| Comparative Example 1 | - | - | - | 100 | 100 |

## Claims

1. An electrochemical cell comprising a cathode containing a proton-conducting compound as an electrode active material, an anode containing a proton-conducting compound as an electrode active material and an aqueous electrolytic solution containing a proton source as an electrolyte, wherein the electrolytic solution comprises a polymeric compound having an atom with an unpaired electron in its principal chain as an electron-transfer promoter.

2. The electrochemical cell as claimed in Claim 1 wherein the electron-transfer promoter is a polymeric compound which in the principal chain, has oxygen or nitrogen as an atom with an unpaired electron.

3. The electrochemical cell as claimed in Claim 1 wherein the electron-transfer promoter is a polymeric compound having an alkylene oxide moiety in a repeating unit.

4. The electrochemical cell as claimed in Claim 1 wherein the electron-transfer promoter is selected from the group consisting of polyethylene glycol, polyglycelol and polyethyleneimine.

5. The electrochemical cell as claimed in any one of Claims 1 to 4 wherein the polymeric compound has an average molecular weight of 200 to 20,000.

6. The electrochemical cell as claimed in any one of Claims 1 to 5 wherein a content of the polymeric compound is 0.01 to 30 wt% to the electrolytic solution.

7. The electrochemical cell as claimed in any one of Claims 1 to 6 operable such that as a charge carrier, protons are exclusively involved in a redox reaction of the active materials associated with charge/discharge in both electrodes.
